# EUROPEAN PATENT SPECIFICATION

(11) **EP 4 070 913 B1**
(45) Date of publication and mention of the grant of the patent: **03.06.2026**
(21) Application number: 22166316.4
(22) Date of filing: 01.04.2022
(51) Int. Cl.: B23Q 1/03, B23Q 3/08, B27M 1/08

(54) **A MACHINE TOOL WITH RETRACTABLE MEMBERS FOR CLAMPING THE WORKPIECES TO BE MACHINED**
WERKZEUGMASCHINE MIT EINZIEHBAREN ELEMENTEN ZUM EINSPANNEN DER ZU BEARBEITENDEN WERKSTÜCKE
MACHINE-OUTIL DOTÉE D'ÉLÉMENTS RÉTRACTABLES PERMETTANT DE SERRER DES PIÈCES À USINER

(30) Priority: 06.04.2021 IT 202100008450
(43) Date of publication of application: 12.10.2022
(73) Proprietor: PAOLINO BACCI S.R.L., 56021 Cascina (PI) (IT)
(72) Inventor: SPINELLI, Simone, 56021 Cascina (PI) (IT); GUERRINI, Leonardo, 56021 Cascina (PI) (IT)
(74) Representative: Mannucci, Michele

(56) References cited:
- EP-A2- 1 075 903
- EP-A2- 2 117 790
- EP-A2- 2 165 811
- DE-U1- 202012 104 805
- US-A1- 2002 144 751
- US-A1- 2014 015 185

## Description

### TECHNICAL FIELD

The present invention relates to the field of machine tools, i.e., of automatic numerical control machining centers. Embodiments described herein relate in particular to machine tools for machining wooden pieces, such as for example furniture components, chairs and furnishing accessories.

### BACKGROUND ART

For the automatic machining of workpieces in the form of panels or the like, machine tools are known, which use clamping systems of the pneumatic type. Examples of machine tools of this type are disclosed in EP3403793. These machine tools include a plurality of suction cups for pneumatically clamping the workpieces.

To machine elongated workpieces, such as chair and table legs, machine tools are used which employ mechanical pressing devices with pairs of jaws to clamp the workpieces being machined. Examples of machine tools equipped in this way are disclosed in EP2991811 and EP2846967.

DE202012104805 discloses a machine tool according to the preamble of claim 1, which includes a load-bearing structure and a working head supported by the load-bearing structure. The machine tool further includes a support and clamping system for the workpieces to be machined. The workpiece support and clamping system comprises a series of support beams. On each beam a slide is movable and settable in the desired position. Each slide includes suction means to clamp and retain the workpiece during machining. The working head and the support and clamping system are movable with respect to each other according to a plurality of numerically controlled axes. In order to facilitate positioning of the workpieces with respect to the support and clamping system each beam is combined with abutments. The abutments are retractable to prevent co-action with the workpiece during machining. This known machine tool does not include mechanical clamping members for clamping the workpieces and usable as an alternative to the pneumatic clamping members.

Machine tools or CNC machining centers of this type are very expensive and should be used continuously, avoiding machine downtime, to amortize the cost. For this purpose, small and medium-sized enterprises must equip a single machine tool to machine elongated workpieces and panels, alternately. This requires long and complex operations to set up the clamping and support systems for the workpieces. These operations are all the more expensive, the smaller the production batches, since the down-times have a greater impact.

It would therefore be beneficial to provide a machine tool or machining center which entirely or partly overcomes or reduces the drawbacks of the machine tools of the prior art. In particular, it would be very useful for the users of these machines to reduce the time required to switch from one type of production to another.

### SUMMARY OF THE INVENTION

According to embodiments disclosed herein, a machine tool is provided including a bearing structure supporting a working head and at least one support and clamping system for the workpieces to be machined. The support and clamping system includes at least a first series of support beams, preferably parallel to each other. The working head and the support and clamping system are movable with respect to each other according to a plurality of numerically controlled axes. Each beam comprises at least one mechanical clamping member retractable approximately to the level of an upper surface of the respective beam, or under said upper surface.

In this way it is possible, with a few simple maneuvers, to alternatively clamp on the same support and clamping system elongated and/or shaped workpieces which require the use of mechanical clamping members, and flat pieces which can be clamped by means of a pneumatic system.

In this context, therefore, the term "about" referring to the retracted position of the mechanical clamping member indicates a position in which the mechanical clamping member is sufficiently retracted to allow the machining of flat workpieces clamped on the beam by means of a pneumatic system.

In preferred embodiments, each mechanical clamping member integrally retracts so as not to protrude with respect to an upper surface of the beam on which it is mounted. In other embodiments, the mechanical clamping member may remain partially above the upper surface of the beam, but in a position such as not to hinder the action of the mechanical clamping members, and not to interfere with the tools of the operating head or working head of the machine tool. In general, the latter must be able to machine the entire perimeter of the pneumatically clamped flat workpiece.

Preferably, the beams have an adjustable distance between them, to adapt to the shape and/or size of the workpiece.

The mechanical clamping members can advantageously include a pressing member having a first jaw and a second jaw, movable one with respect to the other and superimposed on each other, i.e. placed one above the other, to clamp a workpiece to be machined therebetween. In embodiments, each pressing member is retractable in a retracted position, approximately at the height of the upper surface of the respective beam or under said upper surface.

The support and clamping system can further include, for each beam, at least one pneumatic clamping member for the workpieces to be machined, and preferably a plurality of pneumatic clamping members for the workpieces to be machined. The pneumatic clamping member or members may simply include suction holes which open onto the upper surface of the beams, to cooperate with respective intermediate panels, interposed between the beams and the workpiece. The vacuum generated through the suction holes propagates, through channels or through holes in the intermediate panel, up to the upper surface thereof, on which the flat workpiece to be machined rests. The latter is retained by the action of suction through the holes in the underlying beams.

In other embodiments, each pneumatic clamping member may include a suction cup or other suction means.

Advantageously, the pneumatic clamping members can be adjustable in position along the respective beam, to adapt to variable shapes and sizes of the flat workpieces to be clamped. For this purpose, for example, it may be provided that the pneumatic clamping members comprise suction cups carried by carriages or slides adjustable along the beams. The adjustment may be obtained with a servo-assisted translation system, possibly with a numerically controlled movement. In this way the machine set-up is speeded up. In simpler and less expensive solutions, the positions of the pneumatic clamping members along the respective beams can be manually adjusted and set.

In general, the operating head and the workpieces to be machined have relative movements according to one or more numerically controlled translation axes and/or one or more numerically controlled rotation axes. Typically, for example, three numerically controlled translation axes, orthogonal to each other, and one or two numerically controlled rotation axes can be provided.

Further features and embodiments of the machine tool are indicated in the appended dependent claims, which form an integral part of the present description.

In the context of the present description and the appended claims, by "vertical" a direction is understood which is parallel to the direction of action of the force of gravity and by horizontal a direction is understood, which is orthogonal to the vertical direction. The terms "above", "below", "upper", "lower", are understood to refer to the position of the machine in operating conditions.

### BRIEF DESCRIPTION OF THE DRAWINGS

The invention will be better understood by following the description and the accompanying drawings, which illustrate an exemplifying and non-limiting embodiment of the invention. More particularly, the drawings show:
Fig. 1 a front view, along the line I-I of Fig. 2, of a machine tool in one embodiment;
Fig. 2, a plan section according to line II-II of Fig. 1;
Fig. 3, a section according to line III-III of Fig. 1;
Fig. 4 a section according to line IV-IV of Fig. 2;
Fig. 5 a section similar to the section of Fig. 3, in a different embodiment;
Fig. 6 a plan view similar to Fig. 1 in a different working condition;
Fig. 7 a section along VII-VII of Fig. 6;
Fig. 8 an axonometric view of a beam and relative mechanical clamping member;
Fig. 9 a side view of the beam of Fig. 8; and
Fig. 10 a local section of the beam of Figs. 8 and 9.

### DETAILED DESCRIPTION

The accompanying drawings show a possible embodiment of a numerically controlled machine tool, or machining center, in which innovative features described herein are incorporated. In particular, the illustrated machine tool has a gantry structure. It should be understood, however, that the structure of the machine tool may differ from the specific one illustrated herein. For example, the machine tool may have an upright structure, typically a movable upright, rather than a gantry structure. Furthermore, the machine tool described below is a machine configured to work in a pendular cycle, i.e. it has two systems for clamping and moving the pieces, so that while one of said systems supports a piece during machining, the other may be positioned in a loading and unloading area. Furthermore, the illustrated machine tool has a single working head, or operating head, but the possibility of providing machine tools with several operating heads is not excluded, for example for machining several workpieces in at least partially temporally overlapping Cycles.

Coming now to the drawings, the machine tool is indicated as a whole with reference numeral 1. In the illustrated embodiment, the machine tool has a gantry structure 3 with uprights 5 and a crosspiece 7. An operating head, or working head 9, moves along the crosspiece 7. Reference numeral 11 indicates horizontal guides, integral with the crosspiece 7, along which the working head 9 can move. The movement along the guides 11 is a numerically controlled movement according to a numerically controlled translation axis X.

The working head 9 carries one or more electro-spindles. In the illustrated example, the working head carries four electro-spindles 13 for the same number of tools U with a cross arrangement. In other embodiments, the number of electro-spindles 13 may be different and it is to be understood that the configuration of the working head 9 may be different from that illustrated.

The working head 9 is provided with two numerically controlled rotation axes labelled A-A and B-B . In the example shown, the rotation axes are orthogonal to each other. The axis A-A is parallel to the translation axis X and the axis B-B is vertical. The possibility of providing a different number of numerically controlled rotation axes, for example a single rotation axis, no rotation axis, or more than two numerically controlled rotation axes, is not excluded.

The working head 9 is also provided with a numerically controlled translation movement along a vertical axis, indicated with Z. This movement is supplied to the electro-spindle assembly 13 by means of a slide 17 which can move along guides 17 integral with a carriage 19, slidingly engaged with the guides 11 integral with the crosspiece 7.

As mentioned above, in the embodiment shown the machine tool 1 is a dual machine for working with a pendular cycle, or for carrying out different processes, on different pieces in rapid sequence.

For this purpose, the machine tool 1 comprises two systems for supporting and clamping the workpieces to be machined. The two support and clamping systems are labelled 21L and 21R. Hereinafter, when reference is made indifferently to one or the other of the support and clamping systems, they may also be indicated simply with reference numeral 21.

In the illustrated embodiment, each support and clamping system 21 comprises a base, indicated with 23L and 23R for the two support and clamping systems 21L, 21R and hereinafter also simply indicated with reference numeral 23.

The bases 23 extend along the floor P in a horizontal direction, orthogonally to the crosspiece 7.

On each base 23 there is mounted a slide indicated with 25L for the support and clamping system 21L and with 25R for the support and clamping system 21R.

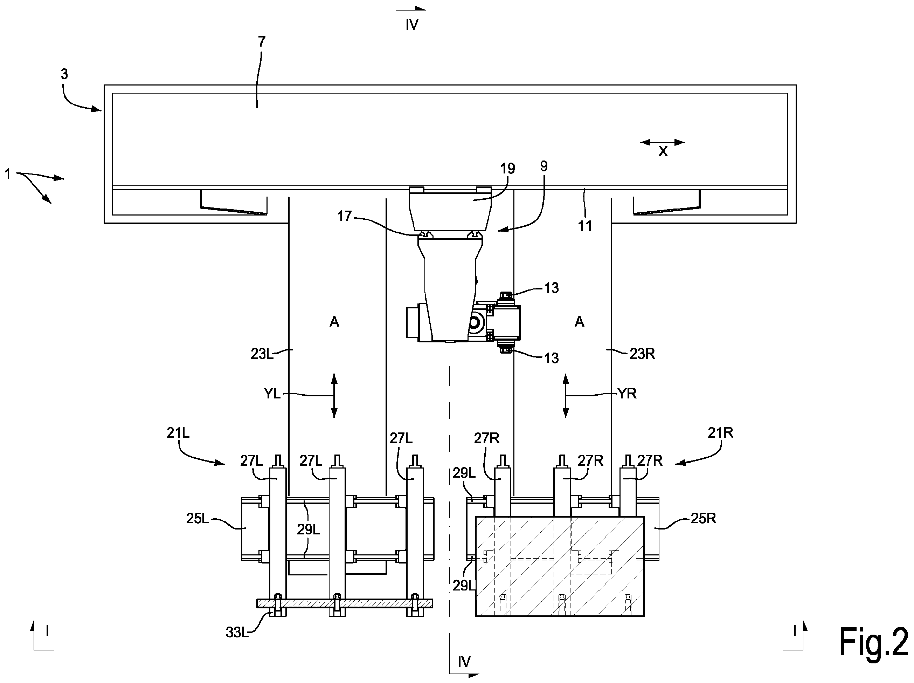

Each slide 25 is movable along the respective base 23 according to a numerically controlled translation axis. The numerically controlled translation movement of the two slides 25L and 25R is indicated with YL and YR, respectively (see in particular Fig. 2).

Respective series of beams 27 are supported on each slide 25. More specifically, 27L indicates three beams mounted on the slide 25L and 27R indicates three beams mounted on the slide 25R. The number of beams in each series may be different from the one indicated. For example, only two beams 27 or more than three beams 27 may be provided for each series.

The beams 27L and 27R are adjustable along guides 29L and 29R integral with the slides 25L and 25R, respectively.

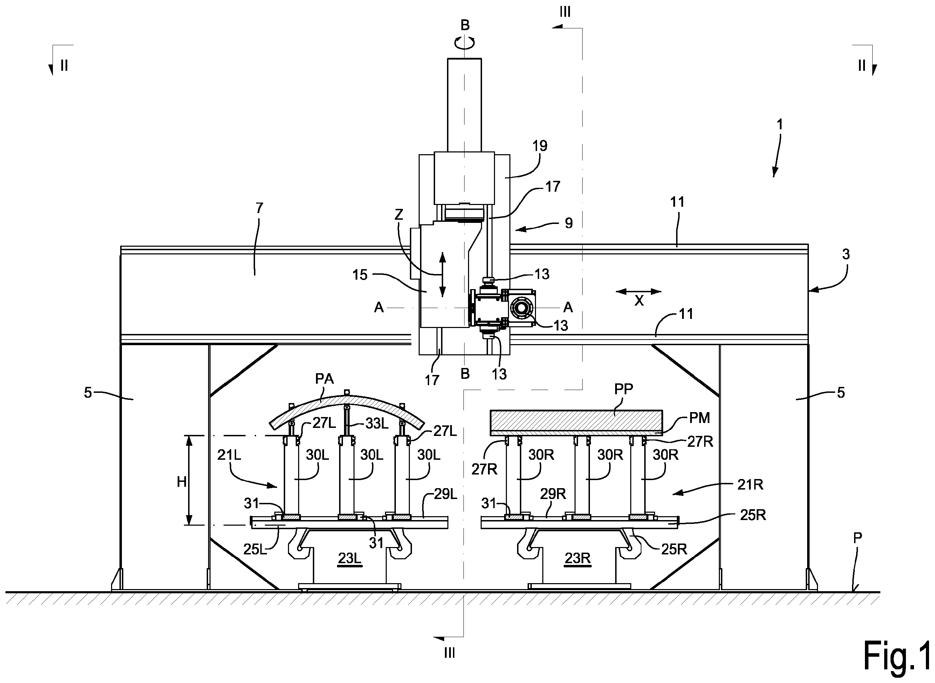

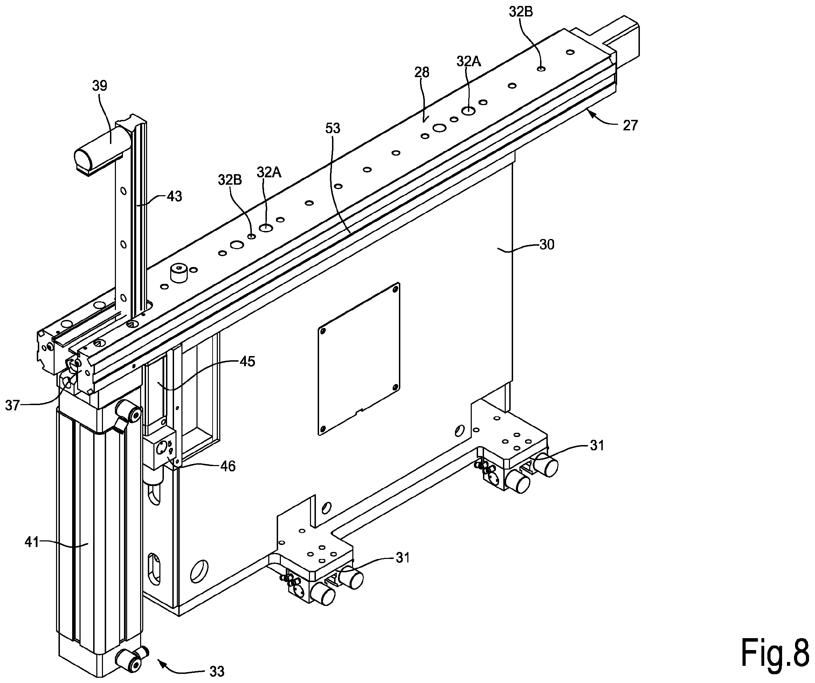

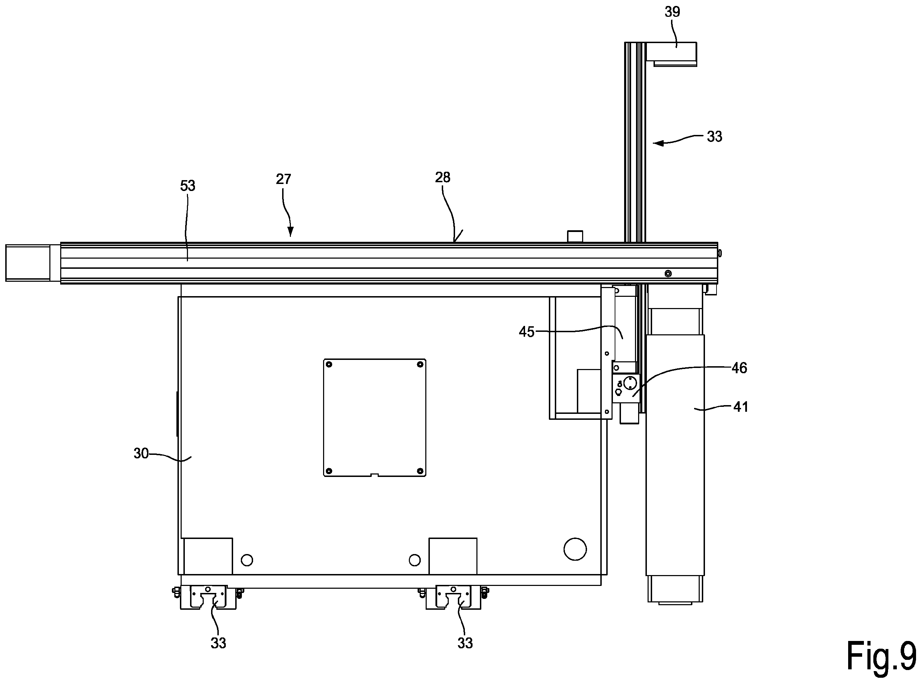

As shown in Fig. 1, the beams 27 are spaced apart from the respective slide 25, for the reasons that will be clarified later. Reference H indicates the distance between the slide 25 and the upper surface of the beams 27 mounted thereon. For this purpose, each beam 27 is connected to a vertical upright 30, as may be seen in particular in Figs. 8 and 9, which carries runners 31 at the bottom which engage with the slides 29.

In the illustrated embodiment, the beams 27 are oriented parallel to the direction Y and each has one end facing the gantry structure 3, and therefore towards the working area, where the working head 9 is located, and an opposite end facing towards the workpiece loading and unloading area, represented in some figures by the presence of an operator O.

Associated with each beam 27 is a mechanical clamping member indicated as a whole with reference numeral 33 (and where useful with 33L and 33R for the two workpiece support and clamping systems 21L, 21R.

In the illustrated embodiment, each mechanical clamping member 33 is placed at the end of the respective beam 27 oriented towards the workpiece loading and unloading area.

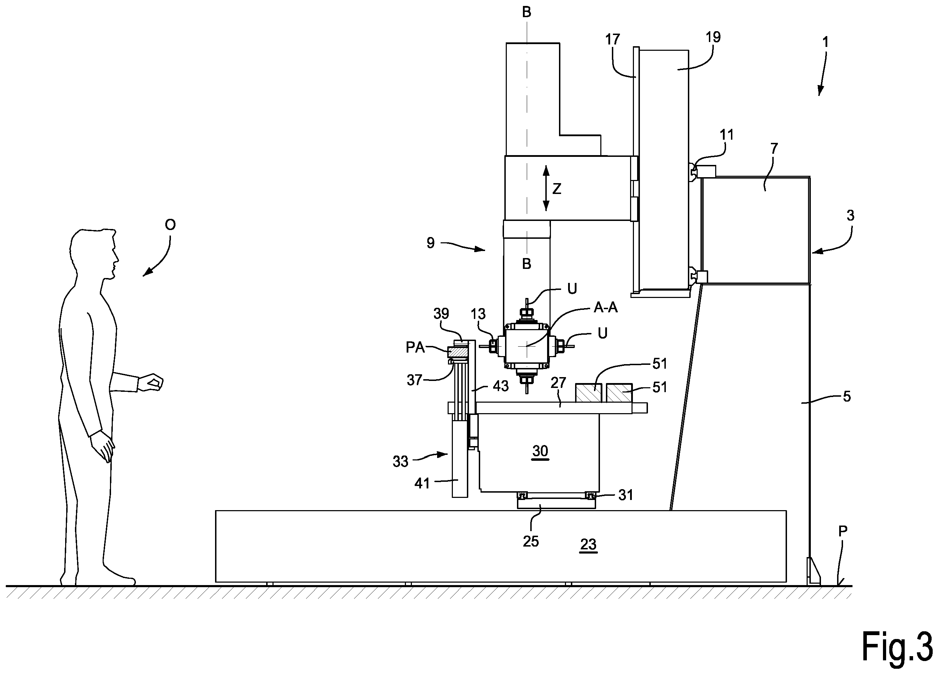

As visible in particular in Figs. 3, 5, 8 and 9, each mechanical clamping member 33 has a lower jaw 37 and an upper jaw 39. In some embodiments, the lower jaw is controlled by an actuator 41, for example a pneumatic or preferably hydraulic cylinder-piston actuator. The upper jaw 39 is mounted at the end of a movable guide 43, adapted to translate , in a direction parallel to the direction of movement of the lower jaw 37, being vertically guided in a shoe 45 integral with the upright 30 and the beam 27. A pneumatic brake 46 is associated with the shoe.

As visible in particular in Figs. 8, 9 and 10, the mechanical clamping member is partially housed (actuator 41 and shoe 45 for engaging the guide 43) under the respective beam 27. The latter has an opening 47 (Fig. 8), to allow both jaws 37, 39 to rise above an upper surface 28 of the respective beam 27 and to slip below the upper surface 28, for the purposes explained below.

By arranging the mechanical clamping member 33, and in particular its actuator 41, under the respective beam 27, a need to increase the footprint of the support and clamping system 21 of the workpieces is avoided.

In the illustrated embodiment, since the mechanical clamping member 33 is associated with one end of the beam 27, the opening 47 is made in the form of a recess at the end of the beam itself.

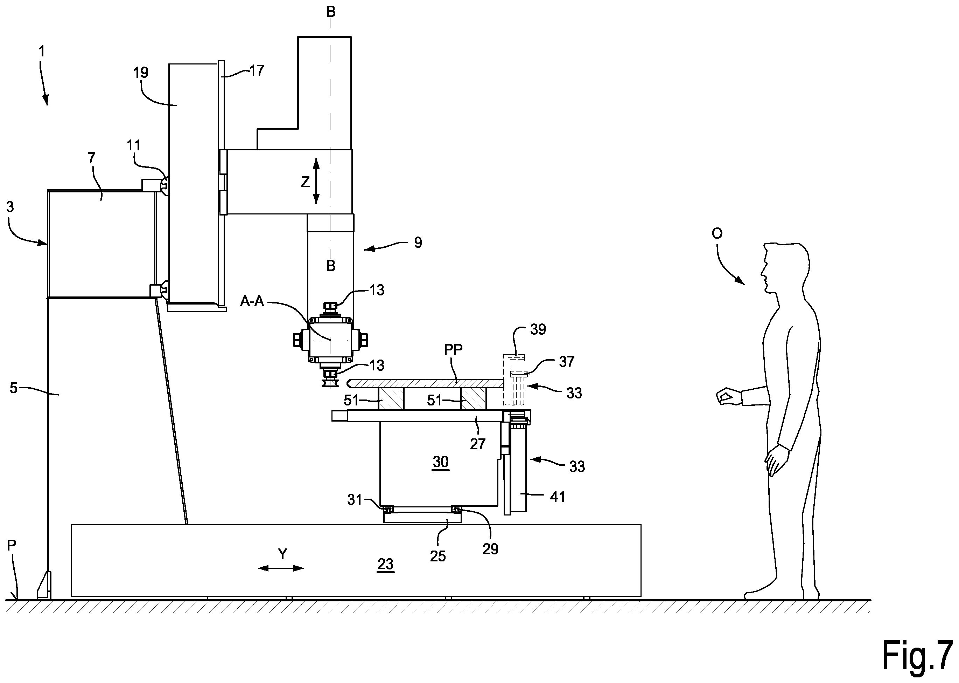

In embodiments, pneumatic clamping means are associated with each beam 27. In the illustrated embodiment, as can be seen in particular, e.g., in Figs. 3 and 7, two pneumatic clamping members, indicated with reference numeral 51, may be associated with each beam 27. Each pneumatic clamping member may comprise one or more suction cups, which serve to clamp a flat workpiece, for example a panel, by means of suction. Although in the accompanying drawings the pneumatic clamping members 51 are shown only on some of the beams 27, as will become clear below, the structure of the support and clamping systems 21L, 21R is such as to allow the installation of pneumatic clamping members 51 on each beam 27 and keep them installed even when their use is not required.

In advantageous embodiments, the pneumatic clamping members are adjustable in position along the respective beam 27. For this purpose, the beams 27 may be provided with longitudinal guides 53, extending along the sides of the beams themselves, see in particular Figs. 8 and 9, and/or at the level of its upper surface 28. The longitudinal guides 53 may be made by means of pieces applied on the beam 27 or they may be formed in one piece from the same block of material (preferably metal) that forms the beam 27. Intermediate forms are also possible, in which the guides are partly obtained by removing material from the block which forms the beam 27, and partly from added elements, for example profiles welded or screwed to a main body of the beam.

The pneumatic clamping members 51 may be made as disclosed in EP3403793, or in another suitable manner. In embodiments, the pneumatic clamping members 51 comprise carriages or slides which are movable and lockable along the beams 27; each slide carries at least one suction cup, which can in turn be adjustable, for example by rotation around a vertical axis, in order to adapt to the shape and size of the workpiece P-P to be clamped.

The machine tool thus configured allows to easily switch from a configuration for machining workpieces that require mechanical clamping by means of the mechanical clamping members 33, to a configuration for machining workpieces that require pneumatic clamping by means of the pneumatic clamping members 51. Typically, workpieces that require mechanical clamping may be elongated pieces, such as parts of chairs or table legs. Workpieces that require pneumatic clamping may be panels or other flat pieces or pieces having flat surfaces of sufficient extension to allow adhesion to suction cups.

In Figs. 1 and 2, the support and clamping system 21L on the left is set up to work elongated workpieces PA. In the illustrated example, the workpiece PA is curved and is clamped by adjusting the individual mechanical clamping members 33 at variable heights. The right support and clamping system 21R is configured to clamp a flat workpiece, such as a panel P-P.

As may be seen in Fig. 3, which shows the support and clamping system set up for machining elongated workpieces PA, the pneumatic clamping members 51 of each beam 27 are parked in an area of the respective beam 27 distant from the area in which the respective mechanical clamping member 33 is. In this way, the pneumatic clamping members 51 do not interfere with the working head 9.

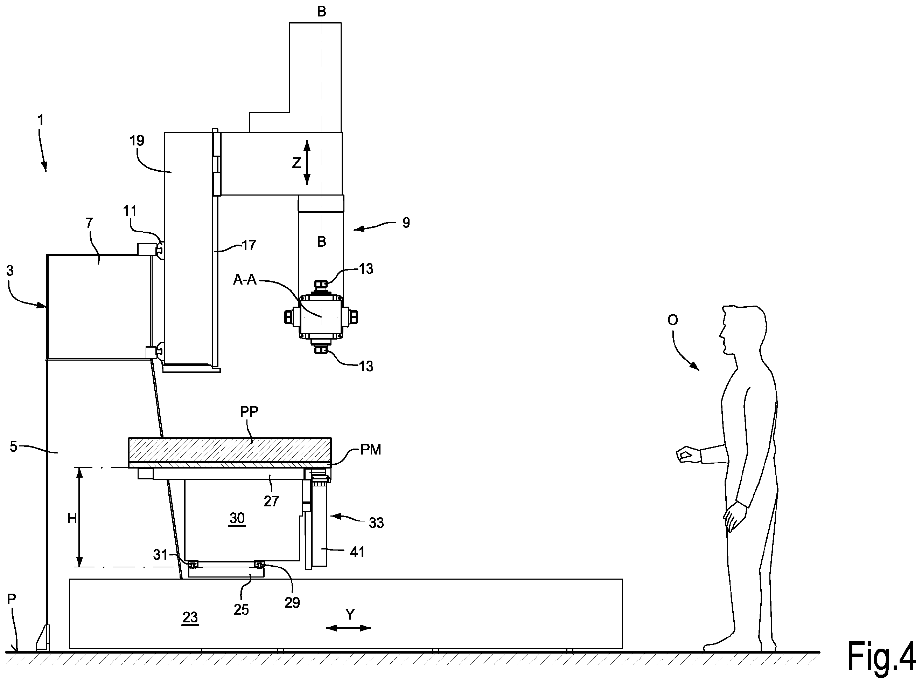

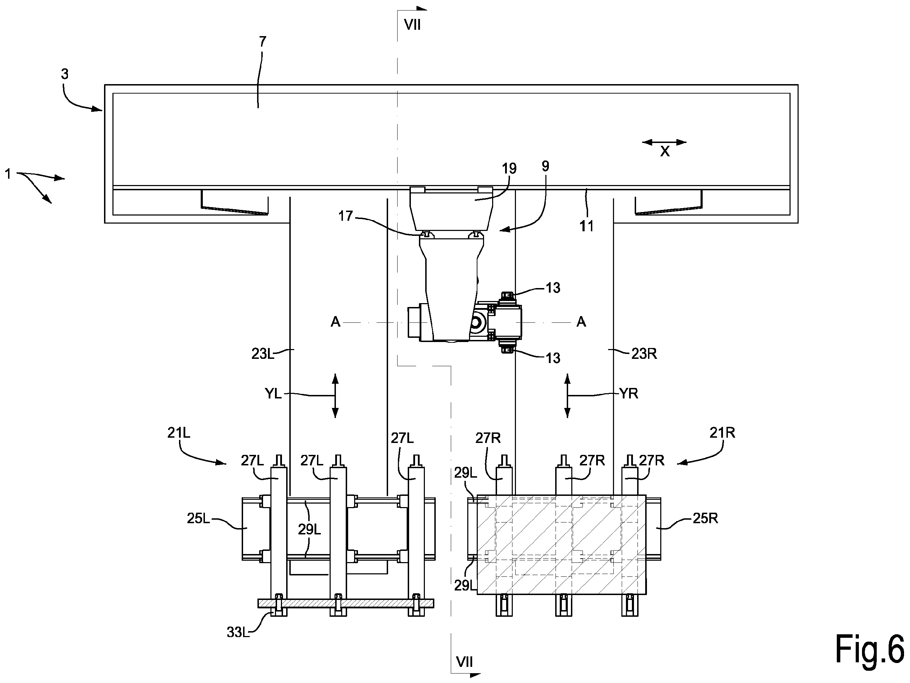

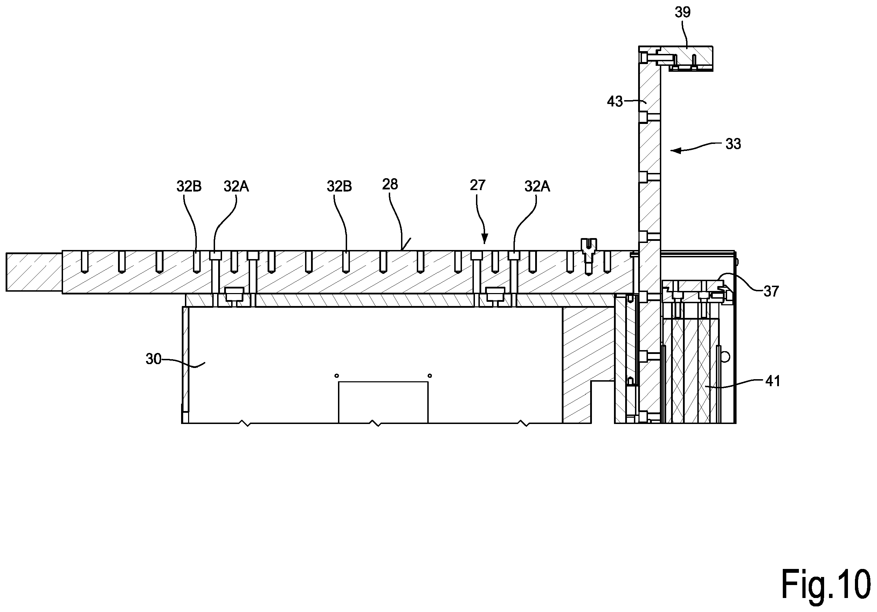

In the support and clamping system 21R, to fix the panel PA to be machined on the beams 27, the mechanical clamping members 33 have been moved under the upper surface 28 of the respective beams 27. The distance H between the upper surface 28 of each beam 27 and the slide 25 allows the entire mechanical clamping member 33 to be housed under the upper surface 28 of the beam, making the plane above the beams 27 completely free to clamp the flat workpieces PP on the beams 27 by means of suction plates PM (Figs.1 and 4) or by means of the pneumatic clamping members 51, as shown in particular in Figs. 6 (right side) and 7. In the layout of Figs. 1 and 4, the flat workpiece PP to be machined is clamped by suction through an intermediate suction plane PM, which may be made of material that can be damaged by the working tools of the machine tool 1. The intermediate suction plane PM has suction ducts that open onto the upper surface thereof, on which the flat workpiece PP to be machined rests and anchors. Below, the channeling made in the intermediate plane PM can be in fluid communication with holes 32A (Figs. 8, 10), made in the upper surface 28 of each beam 27, through which suction can be carried out.

, In addition to the suction holes 32A,each beam 27 can have further holes 32B, e.g., blind and/or threaded holes, for clamping auxiliary equipment (not shown) for clamping pieces of particular shape.

When the flat workpiece PP is clamped by means of the pneumatic clamping members 51, in a positioning step prior to the actual machining, the respective mechanical clamping members 33 can be brought to the at least partially raised position, so that the guides 43 thereof can be used as positioning stops of the flat workpiece PP to be machined, as shown in Fig. 7. Once the workpiece PP has been positioned and clamped by the pneumatic clamping members 51, the mechanical clamping members 33 can be lowered and retracted under the upper surfaces 28 of the beams 27. In this way, the flat workpiece PP can be machined along its entire perimeter by means of the relative movements between the working head 9 and the slide 25.

To this end, it must be understood that the mechanical clamping members 33 can be retracted at the level of the upper surface 28 of the beams 27, or under such upper surface. However, this is not strictly necessary. Depending on the height of the pneumatic clamping members 51, in some embodiments it may be sufficient to lower the mechanical clamping members 33, and in particular the upper jaws 39 thereof, until reaching a height sufficiently close to the upper surface 28, such that the tools U carried by the electro-spindles 13 can move around the flat workpiece PP to be machined without bumping against the jaws 37, 39 of the mechanical clamping members 33.

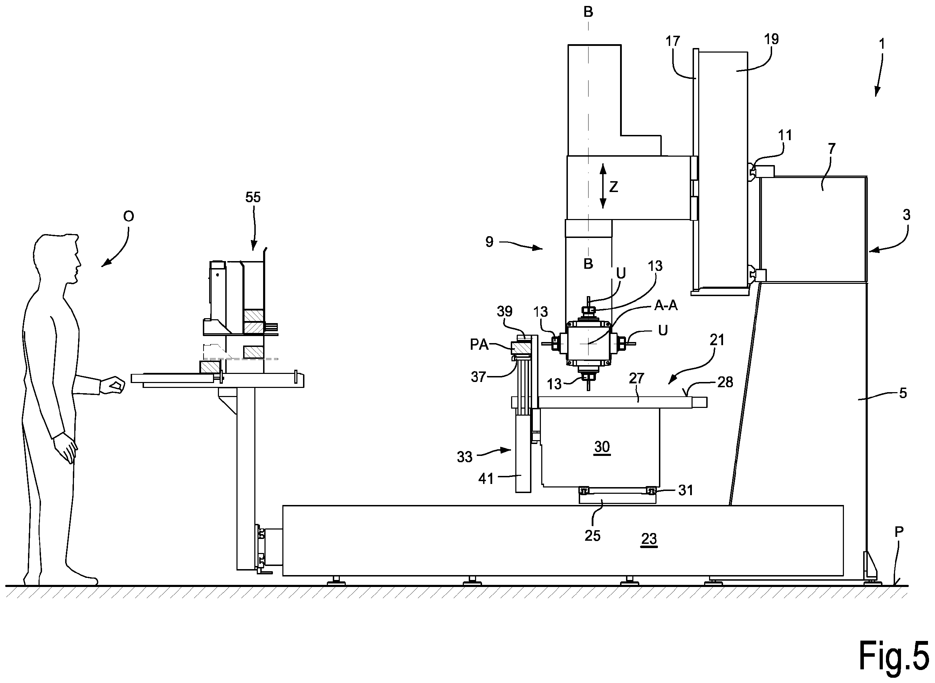

As previously mentioned, the mechanical clamping members 33 are preferably positioned at the ends of the beams 27 facing the loading and unloading area (position of the operator O in charge of the machine, see Figs 5 and 7). In this way, the loading and unloading operations of the elongated pieces PA are facilitated and the interaction between the support and clamping system and a possible automatic loader 55 (Fig. 5) with which the machine tool 1 may be provided is simplified.

## Claims

1. A machine tool (1), comprising:
a load-bearing structure;
a working head (9) supported by the load-bearing structure; and
at least a first support and clamping system (21L, 21R) for the workpieces to be machined;
wherein the support and clamping system comprises at least a first series of support beams (27);
wherein: the working head and the support and clamping system are movable with respect to each other according to a plurality of numerically controlled axes;
**characterized in that** each beam (27) comprises at least one mechanical clamping member (33) adapted to clamp a workpiece and retractable approximately to the level of an upper surface of the respective beam, or under said upper surface.

2. The machine tool of claim 1, wherein the beams are parallel to one another.

3. The machine tool of claim 2, wherein the beams of the first series have an adjustable distance between them.

4. The machine tool of claim 1, 2 or 3, wherein each mechanical clamping member comprises a pressing member having a first jaw and a second jaw, movable one with respect to the other and superimposed on one another, to clamp a workpiece to be machined between them, each pressing member being retractable into a withdrawn position, to the height of the upper surface of the respective beam or under said upper surface.

5. The machine tool of claim 4, wherein the first jaw and the second jaw have a movement orthogonal to the upper surface of the respective beam, such as to retract both the jaws to the height of the upper surface of the respective beam or under said upper surface.

6. The machine tool of one or more of the preceding claims, wherein the mechanical clamping member is associated with one end of the respective beam.

7. The machine tool of one or more of the preceding claims, wherein each beam extends from a first end facing a loading and unloading area of the workpieces to a second end facing the machining area of the workpieces; and wherein the respective clamping member is associated with the first end of the respective beam.

8. The machine tool of one or more of the preceding claims, wherein the upper surface of each beam comprises an opening for the passage of at least one element of the mechanical clamping member, in particular a jaw of the mechanical clamping member.

9. The machine tool of claim 8, wherein the opening is configured as a slot extending from one end of the respective beam.

10. The machine tool of one or more of the preceding claims, wherein each mechanical clamping member is adjustable in height with respect to the upper surface of the respective beam.

11. The machine tool of one or more of the preceding claims, wherein the support and clamping system further comprises, for each beam, at least one pneumatic clamping member (51) for the workpieces to be machined, and preferably a plurality of pneumatic clamping members for the workpieces to be machined; wherein each pneumatic clamping member is adjustable in position along the respective beam.

12. The machine tool of claim 11, wherein each mechanical clamping member comprises a moving rod, orthogonal to the respective beam, adapted to define an abutment surface for positioning workpieces to be machined clampable on the beam through the pneumatic clamping member or members.

13. The machine tool of one or more of the preceding claims, wherein the support and clamping system for the workpieces to be machined comprises a first slide movable according to a first numerically controlled translation axis; wherein the beams of the first series of beams are mounted on said first slide; and wherein the first slide preferably comprises guides for adjusting the distance between the beams.

14. The machine tool of claim 13, wherein the beams of the first series of beams are supported at a distance from the first slide such as to allow the mechanical clamping members to be housed between the upper surface of the respective beams and the first moving slide underneath it.

15. The machine tool of one or more of the preceding claims, comprising a second support and clamping system for the workpieces to be machined; wherein the second support and clamping system comprises a second series of support beams parallel to one another; and wherein each beam of the second series of beams comprises at least one mechanical clamping member configured in the same manner as the mechanical clamping members of the first series of beams, and can further comprise at least one pneumatic clamping members configured in the same manner as the pneumatic clamping members of the first series of beams.

16. The machine tool of claim 15, when dependent on claim 14 or 15, wherein the support and clamping system for the workpieces to be machined comprises a second slide movable according to a second numerically controlled translation axis parallel to the first numerically controlled translation axis, along which the first slide is movable; wherein the beams of the second series of beams are mounted on said second slide; and wherein the second slide preferably comprises guides for adjusting the distance between the beams.

17. The machine tool of claim 16, wherein the beams of the second series of beams are supported at a distance from the second slide such as to allow the mechanical clamping members to be housed between the upper surface of the respective beams and the second movable slide underneath them.

18. The machine tool of one or more of the claims 13, 14, 16 and 17, wherein the guides for adjusting each slide are orthogonal to the numerically controlled translation axis of the slide.

## Patentansprüche

1. Werkzeugmaschine (1) umfassend:
eine tragende Struktur;
einen von der tragenden Struktur getragenen Arbeitskopf (9); und
mindestens ein erstes Stütz- und Spannsystem (21L, 21R) für die zu bearbeitenden Werkstücke;
wobei das Stütz- und Spannsystem mindestens eine erste Reihe von Stütz-Trägern (27) umfasst;
wobei: der Arbeitskopf und das Stütz- und Spannsystem relativ zueinander anhand einer Vielzahl von numerisch gesteuerten Achsen beweglich sind;
**dadurch gekennzeichnet, dass** jeder Träger (27) mindestens ein mechanisches Spannelement (33) umfasst, das zum Spannen eines Werkstücks ausgebildet ist und ungefähr bis auf die Höhe einer Oberseite des jeweiligen Trägers oder unter diese Oberseite zurückgezogen werden kann.

2. Werkzeugmaschine gemäß Anspruch 1, wobei die Träger parallel zueinander angeordnet sind.

3. Werkzeugmaschine gemäß Anspruch 2, wobei die Träger der ersten Reihe einen einstellbaren Abstand zueinander aufweisen.

4. Werkzeugmaschine gemäß Anspruch 1, 2 oder 3, wobei jedes mechanische Spannelement ein Druckelement mit einer ersten und einer zweiten Backe aufweist, die relativ zueinander beweglich sind und übereinander liegen, um ein zu bearbeitendes Werkstück zwischen ihnen festzuklemmen, wobei jedes Druckelement in eine zurückgezogene Position bis zur Höhe der Oberseite des jeweiligen Trägers oder unter diese Oberseite zurückziehbar ist.

5. Werkzeugmaschine gemäß Anspruch 4, wobei die erste Backe und die zweite Backe eine Bewegung orthogonal zur Oberseite des jeweiligen Trägers aufweisen, so dass beide Backen auf die Höhe der Oberseite des jeweiligen Trägers oder unter die Oberseite zurückgezogen werden können.

6. Werkzeugmaschine gemäß einem oder mehreren der vorangegangenen Ansprüche, wobei das mechanische Spannelement mit einem Ende des jeweiligen Trägers verbunden ist.

7. Werkzeugmaschine gemäß einem oder mehreren der vorangegangenen Ansprüche, wobei sich jeder Träger von einem ersten Ende, das einem Be- und Entladebereich der Werkstücke zugewandt ist, zu einem zweiten Ende erstreckt, das dem Bearbeitungsbereich der Werkstücke zugewandt ist; und wobei das jeweilige Spannelement mit dem ersten Ende des jeweiligen Trägers verbunden ist.

8. Werkzeugmaschine gemäß einem oder mehreren der vorangegangenen Ansprüche, wobei die Oberseite jedes Trägers eine Öffnung für den Durchgang mindestens eines Elements des mechanischen Spannelements, insbesondere einer Backe des mechanischen Spannelements, umfasst.

9. Werkzeugmaschine gemäß Anspruch 8, wobei die Öffnung als Schlitz eingerichtet ist, der sich von einem Ende des jeweiligen Trägers erstreckt.

10. Werkzeugmaschine gemäß einem oder mehreren der vorangegangenen Ansprüche, wobei jedes mechanische Spannelement in Bezug auf die Oberseite des jeweiligen Trägers höhenverstellbar ist.

11. Werkzeugmaschine gemäß einem oder mehreren der vorangegangenen Ansprüche, wobei das Stütz- und Spannsystem für jeden Träger des Weiteren mindestens ein pneumatisches Spannelement (51) für die zu bearbeitenden Werkstücke und vorzugsweise eine Vielzahl pneumatischer Spannelemente für die zu bearbeitenden Werkstücke umfasst, wobei jedes pneumatische Spannelement entlang des jeweiligen Trägers in seiner Position verstellbar ist.

12. Werkzeugmaschine gemäß Anspruch 11, wobei jedes mechanische Spannelement eine bewegliche Stange umfasst, die orthogonal zu dem jeweiligen Träger angeordnet ist und dazu ausgebildet ist, eine Anlagefläche zum Positionieren von Werkstücken zu definieren, die durch das pneumatische Spannelement oder die pneumatischen Spannelemente auf dem Träger festklemmbar sind.

13. Werkzeugmaschine gemäß einem oder mehreren der vorangegangenen Ansprüche, wobei das Stütz- und Spannsystem für die zu bearbeitenden Werkstücke einen ersten Schlitten umfasst, der entlang einer ersten numerisch gesteuerten Translationsachse beweglich ist; wobei die Träger der ersten Reihe von Trägern auf dem ersten Schlitten montiert sind; und wobei der erste Schlitten vorzugsweise Führungen zum Einstellen des Abstands zwischen den Trägern umfasst.

14. Werkzeugmaschine gemäß Anspruch 13, wobei die Träger der ersten Reihe von Trägern in einem solchen Abstand vom ersten Schlitten gelagert sind, dass die Spannelemente zwischen der Oberseite der jeweiligen Träger und dem darunter liegenden ersten beweglichen Schlitten aufgenommen werden können.

15. Werkzeugmaschine gemäß einem oder mehreren der vorangegangenen Ansprüche, mit einem zweiten Stütz- und Spannsystem für die zu bearbeitenden Werkstücke, wobei das zweite Stütz- und Spannsystem eine zweite Reihe von zueinander parallelen Stütz-Trägern umfasst, und wobei jeder Träger der zweiten Reihe von Trägern mindestens ein mechanisches Spannelement umfasst, das in derselben Weise wie die mechanischen Spannelemente der ersten Reihe von Trägern eingerichtet ist, und des Weiteren mindestens ein pneumatisches Spannelement umfasst, das in derselben Weise wie die pneumatischen Spannelemente der ersten Reihe von Trägern eingerichtet ist.

16. Werkzeugmaschine gemäß Anspruch 15, wenn abhängig von Anspruch 14 oder 15, wobei das Stütz- und Spannsystem für die zu bearbeitenden Werkstücke einen zweiten Schlitten umfasst, der entlang einer zweiten numerisch gesteuerten Translationsachse parallel zur ersten numerisch gesteuerten Translationsachse bewegbar ist, entlang derer der erste Schlitten bewegbar ist; wobei die Träger der zweiten Reihe von Trägern auf dem zweiten Schlitten montiert sind; und wobei der zweite Schlitten vorzugsweise Führungen zum Einstellen des Abstands zwischen den Trägern umfasst.

17. Werkzeugmaschine gemäß Anspruch 16, wobei die Träger der zweiten Reihe von Trägern in einem solchen Abstand vom zweiten Schlitten gelagert sind, dass die Spannelemente zwischen der Oberseite der jeweiligen Träger und dem darunter liegenden zweiten beweglichen Schlitten aufgenommen werden können.

18. Werkzeugmaschine gemäß einem oder mehreren der Ansprüche 13, 14, 16 und 17, wobei die Führungen zum Einstellen jedes Schlittens orthogonal zur numerisch gesteuerten Translationsachse des Schlittens sind.

## Revendications

1. Une machine-outil (1) comprenant :
une structure porteuse de charge ;
une tête d'usinage (9) supportée par la structure porteuse de charge ; et
au moins un premier système de support et de serrage (21L, 21R) pour l'usinage des pièces à usiner ;
le système de support et de serrage comprenant au moins une première série de barres de support (27) ;
dans lequel : la tête d'usinage et système de support et de serrage sont mobiles l'un par rapport à l'autre suivant une pluralité d'axes commandés numériquement ;
**caractérisé en ce que** chaque barre (27) comprend au moins un organe de serrage mécanique (33) apte à serrer une pièce à usiner et rétractable approximativement jusqu'au niveau d'une surface supérieure de la barre respective, ou sous ladite surface supérieure.

2. La machine-outil selon la revendication 1, dans les barres sont parallèles l'une à l'autre.

3. La machine-outil selon la revendication 2, dans laquelle les barres de la première série de barres ont une distance réglable entre elles.

4. La machine-outil selon la revendication 1, 2 ou 3, dans laquelle chaque organe de serrage mécanique comprend un organe de pression ayant une première mâchoire et une deuxième mâchoire, mobiles l'une par rapport à l'autre et superposées l'une à l'autre, pour serrer une pièce à usiner entre elles, chaque organe de pression étant rétractable dans un position de retrait, à la hauteur de la surface supérieure de la barre respective ou sous ladite surface.

5. La machine-outil selon la revendication 4, dans laquelle la première mâchoire et la deuxième mâchoire ont un mouvement perpendiculaire à la surface supérieure de la barre respective, de façon à rétracter les deux mâchoires à la hauteur de la surface supérieure de la barre respective ou sous ladite surface supérieure.

6. La machine-outil selon l'une ou plusieurs des revendications précédentes, dans laquelle l'organe de serrage mécanique est associé avec une extrémité de la barre respective.

7. La machine-outil selon l'une ou plusieurs des revendications précédentes, dans laquelle chaque barre s'étend d'une première extrémité faisant face à une aire de chargement et de déchargement des pièces à usiner / usinées à une deuxième extrémité faisant face à l'aire d'usinage des pièces à usiner ; et dans laquelle l'organe de serrage respectif est associé à la première extrémité de la barre respective.

8. La machine-outil selon l'une ou plusieurs des revendications précédentes, dans laquelle la surface supérieure de chaque barre comprend une ouverture pour le passage d'au moins un élément de l'organe de serrage mécanique, en particulier une mâchoire de l'organe de serrage mécanique.

9. La machine-outil selon la revendication 8, dans laquelle l'ouverture est configurée en tant que fente s'étendant à partir d'une extrémité de la barre respective.

10. La machine-outil selon l'une ou plusieurs des revendications précédentes, dans laquelle chaque organe de serrage mécanique est réglable en hauteur par rapport à la surface supérieure de la barre respective.

11. La machine-outil selon l'une ou plusieurs des revendications précédentes, dans laquelle le système de support et de serrage comprend en outre, pour chaque barre, au moins un organe de serrage pneumatique (51) pour les pièces à usiner, et de préférence une pluralité d'organes de serrage pneumatiques pour les pièces à usiner ; chaque organe de serrage pneumatique étant ajustable en position le long de la barre respective.

12. La machine-outil selon la revendication 11, dans laquelle chaque organe de serrage mécanique comprend une tige de déplacement, perpendiculaire à la barre respective, apte à former une surface de butée pour positionner des pièces à usiner pouvant être serrées sur la barre au moyen du ou des organe(s) de serrage pneumatique.

13. La machine-outil selon l'une ou plusieurs des revendications précédentes, dans laquelle le système de support et de serrage pour les pièces à usiner comprend un premier coulisseau mobile suivant un premier axe de translation commandé numériquement ; les barres de la première série de barres étant montées sur ledit premier coulisseau ; et le premier coulisseau comprenant de préférence des guides pour régler la distance entre les barres.

14. La machine-outil selon la revendication 13, dans laquelle les barres de la première série de barres sont supportées à une distance du premier coulisseau telle qu'elle permet aux organes de serrage mécanique d'être logés entre la surface supérieure des barres respectives et le premier coulisseau mobile en dessous d'elle.

15. La machine-outil selon l'une ou plusieurs des revendications précédentes, comprenant un deuxième système de support et de serrage pour les pièces à usiner ; le deuxième système de support et de serrage com prenant une deuxième série de barres de support parallèles les unes aux autres ; et dans lequel chaque barre de la deuxième série de barres comprend au moins un organe de serrage mécanique configuré de la même manière que les organes de serrage mécanique de la première série de barres, et peut comprendre en outre au moins un organe de serrage pneumatique configuré de la même manière que les organes de serrage mécanique de la première série de barres.

16. La machine selon la revendication 15, lorsque celle-ci est dépendante de la revendication 14 ou 15, dans lequel le système de support et serrage pour les pièces à usiner comprend un deuxième coulisseau mobile suivant un deuxième axe de translation commandé numériquement parallèle au premier axe de translation contrôlé numériquement ; les barres de la deuxième série de barres étant montées sur ledit deuxième coulisseau ; et ledit deuxième coulisseau comprenant de préférence des guides pour régler la distance entre les barres.

17. La machine selon la revendication 16, dans laquelle les barres de la deuxième série de barres sont supportées à une distance du deuxième coulisseau telle qu'elle permet aux organes de serrage mécanique d'être logés entre la surface supérieure des barres respectives et le deuxième coulisseau mobile en dessous d'elle.

18. La machine-outil selon l'une ou plusieurs des revendications 13, 14, 16 et 17, dans laquelle les guides pour régler chaque coulisseau sont perpendiculaires à l'axe de translation commandé numériquement du coulisseau.
